# EUROPEAN PATENT APPLICATION

(11) **EP 4 760 445 A1**
(43) Date of publication of application: **17.06.2026**
(21) Application number: 25211334.5
(22) Date of filing: 27.10.2025
(51) Int. Cl.: G05F 1/46, G05F 1/563, G05F 1/575, H02M 1/00, H02M 3/157

(54) **DYNAMIC RE-CALIBRATION OF VOLTAGE REGULATOR**

(30) Priority: 12.12.2024 US 202418979233
(71) Applicant: INTEL Corporation, Santa Clara, CA 95054 (US)
(72) Inventor: LURIA, Kosta, 42815 Pardesiya (IL); BROWN, Yuval, Raanana (IL); ZELIKSON, Michael, Haifa (IL); SITON, Dolev, Beer Yaakov (IL); GIL, Lior, 3542002 Haifa (IL)
(74) Representative: Viering, Jentschura & Partner mbB Patent- und Rechtsanwälte

(57) **Abstract**

Embodiments herein relate to a voltage regulator (VR) including a measurement circuit to perform a periodic re-calibration which accounts for temperature effects. The measurement circuit compares the output voltage, Vout, to a work point (WP) or target voltage. Based on the comparison, an input to a summing circuit is adjusted. The measurement circuit can include a finite-state machine (FSM) which operates at a clock frequency which is significantly lower than a clock frequency of a main control loop of the VR. The FSM can increment or decrement the input to the multiplier when WP>Vout or WP<Vout, respectively. The WP is modified by the multiplier before being input to the VR.

## Description

### BACKGROUND

Computing devices often rely on voltage regulators to supply power to components of the devices. For example, a voltage regulator can convert the main supply voltage of a computing device, such as 12 V, down to lower voltages, such as 5 V, 3.3 V or 1.8 V. The lower voltages can be used by various components in the computing device, such as a Universal Serial Bus (USB) interface, memory such as dynamic random access memory (DRAM) and processing resources such as a central processing unit (CPU). However, various challenges are presented in designing a voltage regulator.

### BRIEF DESCRIPTION OF THE DRAWINGS

The embodiments of the disclosure will be understood more fully from the detailed description given below and from the accompanying drawings of various embodiments of the disclosure, which, however, should not be taken to limit the disclosure to the specific embodiments, but are for explanation and understanding only.
FIG. 1 depicts an example analog voltage regulator (VR) 100, in accordance with various embodiments.
FIG. 2 depicts an example digital linear voltage regulator (DLVR) 200, in accordance with various embodiments.
FIG. 3 depicts an example VR circuit 300 including a DLVR 310 with a work point pre-shape circuit 320, in accordance with various embodiments.
FIG. 4 depicts an example plot of output voltage Vout versus work point voltage (WP) consistent with FIG. 3, in accordance with various embodiments.
FIG. 5 depicts an example VR circuit 500 including the work point pre-shape circuit 320 and DLVR 310 of FIG. 3 and a measurement circuit 510, in accordance with various embodiments.
FIG. 6 depicts another example VR circuit 600 including the work point pre-shape circuit 320 and VR 310 of FIG. 3 and a measurement circuit 610, in accordance with various embodiments.
FIG. 7 depicts an example implementation of the measurement circuit 610 of FIG. 6, in accordance with various embodiments.
FIG. 8 depicts a flowchart of an example process consistent with FIGs. 4-7, in accordance with various embodiments.
FIG. 9 illustrates an example of components that may be present in a computing system 950 for implementing the techniques (e.g., operations, processes, methods, and methodologies) described herein.

### DETAILED DESCRIPTION

As mentioned at the outset, various challenges are encountered in designing a voltage regulator.

The high-level behavior of a voltage regulator (VR) is typically consistent with the following procedure. First, the VR receives a digital word that represents the value of the desired output voltage, or work point (WP) and converts it to an analog value. Second, the VR compares the actual value of the output voltage (Vout(t)), usually using an analog-to-digital converter (ADC). Third, the measured error, WP-Vout(t), is used by a compensator (CPS) unit for the calculation of the required change of relevant power stage characteristics (e.g., resistance). In some architectures, the previous value of the error and/or the previous value of the CPS output is factored as well. The second and third steps are repeated until the error becomes lower than a resolution of the VR.

However, due to factors such as process and layout imperfections, and the impact of parasitics, the ideal procedure described above does not provide optimum performance. To ensure that a VR output voltage meets the desired quality criteria, an individual calibration procedure for each VR is usually required. For example, if a classic flash ADC is used in the design, a calibration is needed for the offset of the comparators that form the ADC.

One of the challenges associated with a calibration is that circuit performance is, to some extent, temperature dependent. Therefore, it is preferable to perform a calibration process at several temperature points and use the data to adjust the VR tuning to the actual temperature. However, such an approach significantly increases the test time and complexity and, hence, is prohibitive, at least in cost-sensitive products. In many cases, the calibration is done at one temperature point, the impact of the temperature drift of the output voltage is assessed empirically, and the resulting inaccuracy in positioning is factored as a guard band, which negatively impacts the performance metrics of the VR.

One approach to mitigating the temperature dependence of the VR output voltage is to use design techniques that feature low sensitivity to temperature variations. However, design approaches that lead to a weak temperature dependency of a circuit are usually complex and result in an increase in the circuit area and power consumption. Also, these techniques frequently manifest a high sensitivity to technology node analog parameters (e.g., a diode ideality factor).

Another approach is to calibrate at multiple (at least two) temperature points, when the additional testing cost is acceptable. However, this does increase the product cost.

The solutions provided herein address the above and other issues. In one aspect, a VR circuit is provided that performs an *in situ,* periodic re-calibration, automatically and in real time, over the life cycle of the VR. In an example implementation, an autonomous calibration mechanism uses a single comparator for decision making, and can be designed to avoid or minimize temperature dependence and aging effects. The calibration can be done with respect to a "golden" reference voltage such as a voltage, Vbgr, provided by a bandgap reference circuit which may already be present in a VR. Vbgr can be considered to be essentially temperature-independent. The periodicity of the re-calibration can be consistent with a thermal time constant so that the VR output tuning tracks and mitigates the impact of temperature variations with time.

The solutions provide a number of advantages, including enabling a reduction of the Vmin guard band and, consequently, improving a product power-performance metric, without impacting the test time. Moreover, since the dynamic re-calibration can be performed throughout the lifetime of the product, aging-related VR degradation is also mitigated. This enables either a further guard band reduction and/or a more cost-effective design - as it can enable a relaxation on the "natural" temperature and aging resilience of the VR.

The solutions are applicable to most types of VR topologies including analog VRs, e.g., buck VRs, and digital VRs, e.g., Digital Linear Voltage Regulators (DLVRs). The solutions are applicable, e.g., to an integrated voltage regulator (IVR), that is, a VR that is contained within a single integrated circuit (IC) package or chip.

These and other features will be further apparent in view of the following discussion.

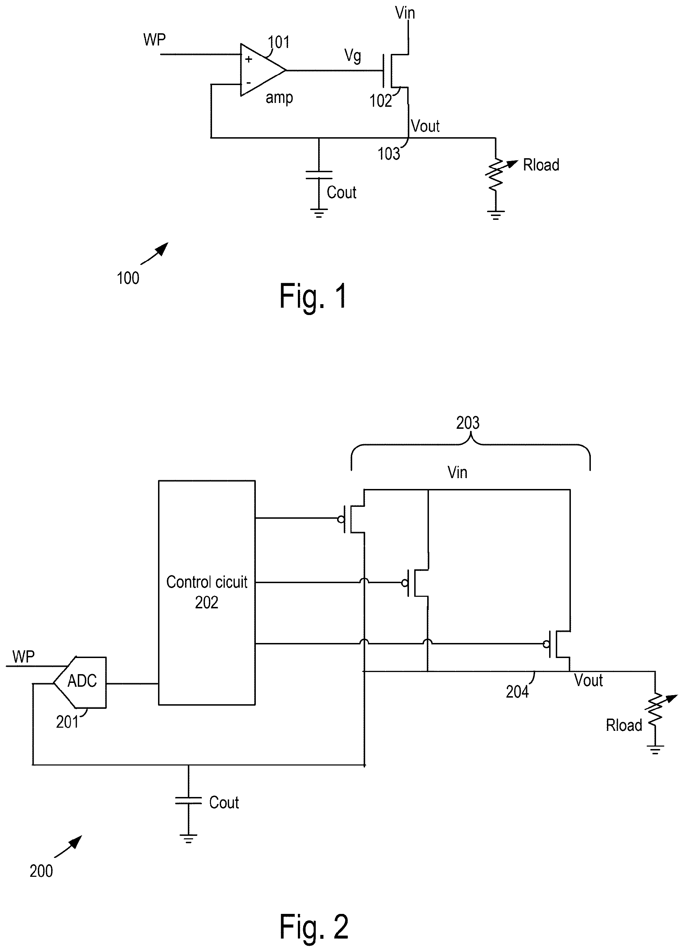

FIG. 1 depicts an example analog voltage regulator (VR) 100, in accordance with various embodiments. The VR includes an amplifier 101 which receives a work point (WP) or reference voltage at a non-inverting input and a feedback voltage Vout at an inverting input. An output of the amplifier, Vg, is provided to the control gate of an n-type transistor 102 such as a metal-oxide-semiconductor field-effect transistor (MOSFET). The transistor receives Vin at its source and provides Vout at its drain at an output node 103. A resistive load, Rload, is coupled to the output node in this example. The VR also includes an output capacitor Cout coupled between the output node and ground.

The VR regulates the output voltage Vout, by adjusting Vg as Vout changes. For example, if Vout>Vref, Vg<0 so that the transistor 102 remains off to decrease Vout. If Vout<Vref, Vg>0 so that the transistor turns on to increase Vout. The VR has a negative feedback loop.

FIG. 2 depicts an example digital linear voltage regulator (DLVR) 200, in accordance with various embodiments. A DLVR includes a control circuit 202 which controls the resistance or output of a power stage 203 based on a digital value from an ADC 201. The ADC in turn provides the digital value based on WP and an analog value of Vout at the output node 204. The power stage 203 can include a number of p-type MOSFETs, for example, having control gates coupled to the control circuit 202. The control circuit can output one bit as a control voltage to turn on or off each transistor in the power stage and thereby modulate Vout. The transistors are coupled in parallel between a supply node at Vin and the output node 204.

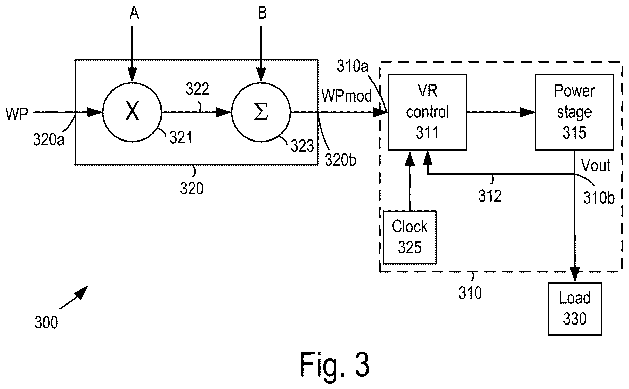

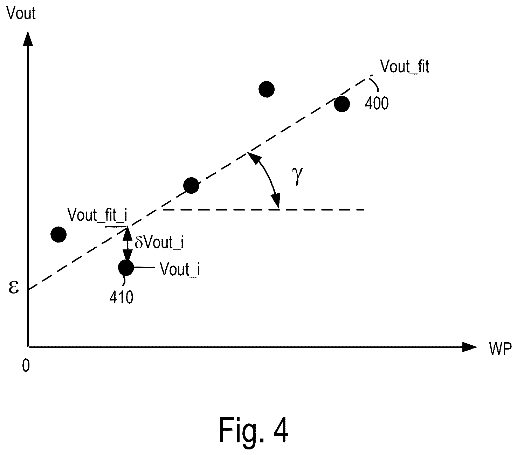

FIG. 3 depicts an example VR circuit 300 including a DLVR 310 with a work point pre-shape circuit 320, in accordance with various embodiments. A DVLR is depicted in some examples, but as mentioned, the solutions are generally applicable to any type of VR. The work point pre-shape circuit 320, or voltage pre-shape, shaping or conditioning circuit, adjusts WP with a multiplier 321 and a summing circuit 323. The work point pre-shape circuit 320 has an input node 320a and an output node 320b. The multiplier receives a value A, and the output on the path 322, WP*A, is added to a value B at a summing circuit 323, to provide a modified value of WP, WPmod=WP*A+B, on the input node 310a of the VR 310. In a plot of Vout vs. WP on an x-y axis (see FIG. 4), A is the slope and B is the y-offset. The values A and B can be set as part of a calibration process at the time of manufacture. In an initial configuration, A=1 and B=0, for example.

WPmod is provided to the VR control circuit 311 as the requested work point or target voltage. The VR 310 has an input node 310a and an output node 310b. The VR outputs corresponding control signals to a power stage 315 which, in turn outputs a voltage Vout to a load 330 via the output node 310b. The VR control circuit 311 also receives Vout via a feedback path 312 and compares it to WPmod to determine whether to adjust the control signals for the power stage. The VR is responsive to a first clock 325 which governs the frequency at which the VR can update the power stage.

FIG. 4 depicts an example plot of output voltage Vout versus work point voltage (WP) consistent with FIG. 3, in accordance with various embodiments. The plot can be obtained by setting different levels of WP and measuring Vout for each level. Each dark circle represents a measurement point in this simplified example. In one approach, the plot is obtained with A=1 and B=0.

The output voltage level does not match the desired work point value in some cases due to, e.g., process variations, layout imperfections and the impact of parasitics. A calibration process can be performed to eliminate or reduce the errors. In a first step, the actual values of Vout for different WP settings are measured, e.g., during the manufacturing process of the VR. At this step, the original value of the WP is not modified (i.e., A=1 and B=0), and it appears as is at the input of the VR control circuit, also referred to as a compensator block. Hence, the correlation between Vout and a target voltage Vtgt (= =WP) represents the aberrations introduced by the compensator (i.e., the analog parts of it). The dependency between WP and Vout is approximated by a linear function: Vout_fit = y*WP + ε, with some scatter of δVout_i. The line 400 represent a best linear fit to the data, where γ (gamma) is the slope of the line, ε (epsilon) is the γ-intercept, and the equation of a line has the format y=mx+b. For an example ith data point 410, the output voltage is Vout_i, which represents an error of δVout_i relative to the corresponding voltage of the line, Vout_fit_i. An observation is that Vout_i=γ*WPmod + ε + δVout_i. With A=1/γ and B=-ε/γ, WPmod=WP*1/γ - ε/γ.

Note that for a properly designed VR, the slope (y) of Vout_fit = f(WP) function is usually very close to unity, while the offset (ε) is the main source of inaccuracies and varies from part to part.

The digital representations of (y, ε) are fed into the work point pre-shape circuit 320 and the modified value of the work point is used by the VR. As the result, the output voltage is close to its target value: Vout_fit = y*WPmod + ε = γ*(1/γ*WP - ε/γ ) + ε = WP. To avoid any ambiguity, the value of the offset obtained during the calibration process is denoted by ε(cal). Then, the actual value of any Vout point is: Vout_i = Vout_fit + δVout_i = WP + δVout_i. The difference between WP and Vout_i is called the direct current (DC) error of a DLVR.

A disadvantage of this approach is that it is accurate at the temperature at which calibration was performed. Usually, the slope features a very weak dependency on the temperature, while the offset may change significantly with the temperature. As mentioned, to cope with this disadvantage, one can: (a) either invest in the design sophistication, resulting in an area and power penalty, and process sensitivity, or (b) perform multi temperature (at least two points) calibration and let power management re-calculate the offset, resulting in increased test time/cost and software complexity.

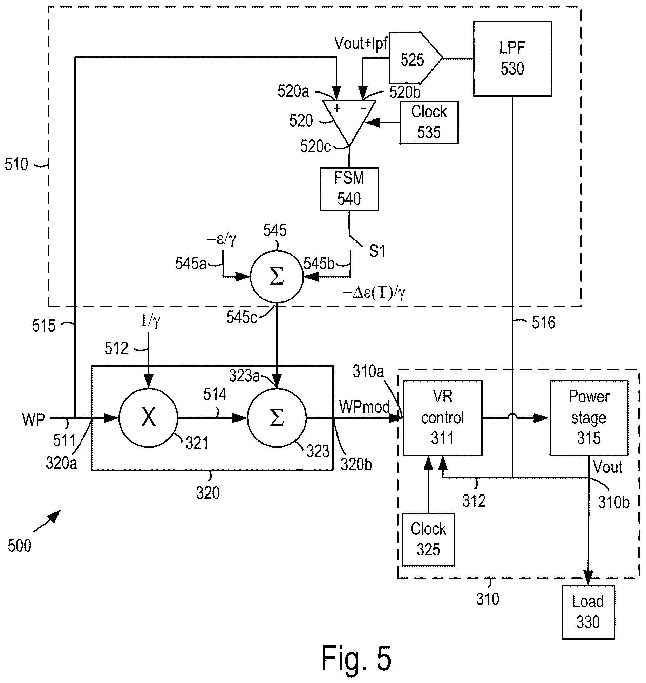

The solutions herein address the above issues by providing a measurement circuit for a VR which enables autonomous adjustment of the offset in the real time. An example is provided in FIG. 5.

FIG. 5 depicts an example VR circuit 500 including the work point pre-shape circuit 320 and DLVR 310 of FIG. 3 and a measurement circuit 510, in accordance with various embodiments. The multiplier 321 receives WP via a path 511 and the input node 320a and a slope correction term 1/γ via a path 512. This is an initial or unmodified value of WP. The summing circuit 323 receives the output of the multiplier on a path 514 and an offset correction term -ε/γ - ε(T)/γ on a path 513 and provides WPmod to the output node 320b and to the VR input node 310a. In the VR 310, the feedback path 312 is part of a first feedback loop which is used to adjust an output of the VR 310, and the measurement circuit 510 is part of a second feedback loop which is used to adjust -ε(T)/γ and the input to the summing circuit 323. The first feedback loop operates at a first frequency and the second feedback loop operates at a second frequency which is less than the first frequency.

In an example implementation, the VR implements a first feedback loop to govern a voltage at the output node in response to a work point voltage, and the measurement circuit implements a second feedback loop to govern the work point voltage.

Also, the voltage-shaping circuit is to receive an initial value of the work point voltage and to output a modified value of the work point voltage to the input node of the VR.

The measurement circuit 510 includes a comparator 520 which is coupled at an input node 520a to WP via a path 515 and at an input node 520b to Vout via a path 516. The measurement circuit further includes a low pass filter (LPF) 530 and an ADC 525. The ADC outputs a loss-pass filtered, digital version of Vout, Vout_lpf. The comparator 520 provides an output at its output node 520c representing a difference between WP and Vout_lpf to a finite state machine (FSM) 540 at a rate which is determined by a clock 535. The clock 535 (a second clock) may operate at a slower rate (e.g., 1/2^{N}th the rate, where N≥7) than the clock 325 (a first clock). Each clock cycle, the FSM provides a time-varying output -Δε(T)/γ via a switch S1 and an input node 545b to a summing circuit 545. The summing circuit 545 has input nodes 545a and 545b and an output node 545c. The output node 545c is coupled to an input node 323a of the summing circuit 323.

The input node 545a provides an additional, fixed input -ε/γ to the summing circuit. -ε/γ -Δε(T)/γ is an output of the summing circuit on the output node 545c. T denotes a sampling time of the FSM output.

In an example implementation, the FSM output comprises a positive increment if WP>Vout_lpf, a negative increment if WP<Vout_lpf, or no change if WP≈Vout_lpf.

The measurement circuit provides an additional control loop, independent from the main feedback loop. This control mechanism periodically compares the actual output voltage (Vout_lpf) to its target value (WP) and adjusts the Vout so that the remaining DC error is bound by the accuracy of the measurement system. The difference in the regulation bandwidth between the two loops can be more than two decades so that no stability issues or challenges exist. That is, the frequency of the first clock 325 can be over 10-100 times greater than the frequency of the second clock 535. The VR operates according to the first clock and the measurement circuit operates according to the second clock.

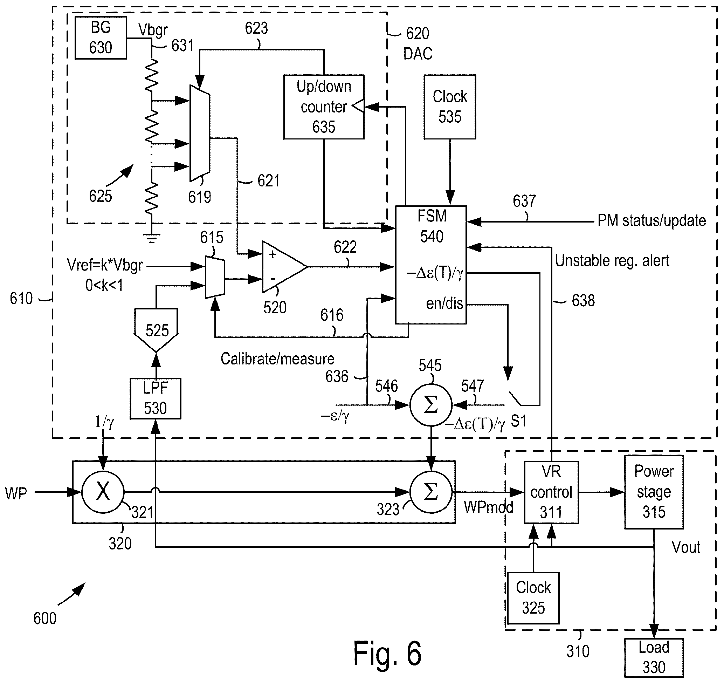

FIG. 6 depicts another example VR circuit 600 including the work point pre-shape circuit 320 and VR 310 of FIG. 3 and a measurement circuit 610, in accordance with various embodiments. The LPF 530, ADC 525, comparator 520, clock 535 and FSM 540 of FIG. 5 are repeated. An analog multiplexer 615 passes either the digital output Vout from the ADC 525 or a reference voltage, Vref=k*Vbgr, to the inverting input of the comparator, based on a calibrate/measure signal on a path 616 from the FSM. In a calibration mode, Vref is passed and in a measurement mode, Vout is passed. The non-inverting input of the comparator receives a voltage from a multiplexer 619 or selector which in turn is coupled to a resistor ladder 625. A bandgap reference circuit 630 outputs a reference bandgap voltage, Vbgr, to a supply voltage node 631 of the resistor ladder. Based on a signal on a path 623 from an up/down counter 635, the multiplexer 619 passes a voltage on an output node 621 to the comparator. The comparator 520 provides an output on a path 622 to the FSM 540 based on the relative values of its inputs.

The FSM can be a digital circuit which receives digital inputs and provides digital outputs, in one approach. The FSM provides a signal to an input of the up/down counter 635 to trigger an up or down change in the signal on the path 623. The FSM receives other inputs including -ε/γ on a path 636, a power management (PM) status/update (from a power management circuit) on a path 637 and an unstable reg. alert (a regulation stability indicator provided by the VR) on a path 638. The up/down counter 635 and the resistor ladder 625 are part of a digital-to-analog converter (DAC) 620 which provides an analog voltage on the output node 621. This analog voltage is obtained or generated from Vbgr.

In an example implementation, compensation need not be provided for temperature variations of the analog reference voltage on the output node 621, since this voltage is based on Vbgr, the output of the bandgap (BG) reference circuit 630. A BG reference circuit generates a voltage that is largely independent of temperature fluctuations.

As mentioned, the measurement circuit 610 operates at a slow cycle compared to the main feedback loop of the VR. The intention is to enable the slow loop operation under stable regulation conditions. In other words, during either power management events (e.g., a change in WP), or regulation mode changes (e.g., a transition in the VR power state and/or the operation mode), the temperature compensation can be disabled. This decision is made by the FSM, factoring in the power management status and data and regulation stability indicators. If the regulation is stable, the temperature compensation loop of the measurement circuit 610 is functional.

In the measurement circuit 610, the output voltage of the DAC 620 can be swept using the up/down counter 635. The DAC output and the measured signal (Vout) are connected to the low offset comparator 520. When the output of the DAC is swept, the code at which the comparator output changes indicates the digital representation of the analog value of the measured signal. For example, when the counter 635 counts up, starting from a minimum voltage, a sequence of increasing voltages is output on the output node 621 and the comparator indicates the first voltage which exceeds Vout. When the counter 635 counts down, starting from a maximum voltage, a sequence of decreasing voltages is output on the output node 621 and the comparator indicates the first voltage which is less than Vout. FSM then knows that Vout is bounded by these first voltages, and can decide whether to set a non-zero value of -ε(T)/γ accordingly.

To reduce noise, quantization and other effects, the measurement can be performed several times in both up and down directions. The result is an average of obtained codes over all measurements. To reduce the irrelevant high-frequency variations (i.e., above the bandwidth of interest) of the measured signal, it passes through the LPF 530 before being fed into the comparator 520. The LPF can features a time constant of the order of several tens of microseconds, for instance. The time constant can be configurable post-silicon, e.g., after the die containing the VR has been fabricated. This range of time constants is consistent with the value of a relevant temperature time constant. The analog multiplexer 615 enables measurement of different signals using the same circuit. Preferably, the measurement system of the slow compensation loop does not feature a noticeable temperature dependence, as a goal of the control mechanism is to compensate for slow (relative to the main regulation loop) variations in temperature. Consequently, it is possible, without losing temperature compensation effectiveness, to recalibrate the measurement/decision system every time the output voltage offset is re-adjusted. For this purpose, the voltage on the output node 621, which is proportional to Vbgr, is used as a voltage etalon (an adjustable voltage).

The measurement circuit can advantageously be implemented at a relatively low cost while providing a significant performance advantage to the VR by substantially eliminating the temperature dependence of its output.

Further details regarding an example implementation of the measurement circuit 610 are discussed below. Note that this is just one possible implementation as alternative designs are possible.

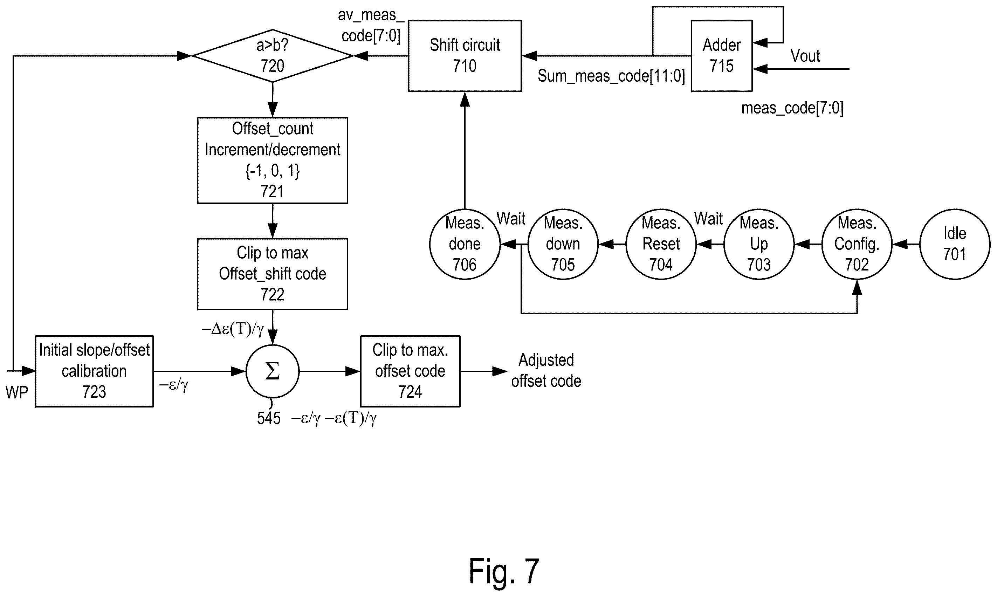

FIG. 7 depicts an example implementation of the measurement circuit 610 of FIG. 6, in accordance with various embodiments. The circles represent states that the FSM can enter, one at a time. For example, the FSM can initially be in an idle state 701 and transition to a measurement configuration state 702. The FSM transitions to a measure up state 703 in which the output of the DAC 620 is increased in a sweep from a minimum value to a maximum value, for example, while the comparator 520 compares the DAC output to Vout. Once this is completed, a wait is implemented, then a measurement reset state 704 is reached. The FSM then transitions to a measure down state 705 in which the output of the DAC 620 is decreased in a sweep from a maximum value to a minimum value, for example, while the comparator 520 compares the DAC output to Vout. The states 702-705 can be repeated for a number of iterations (Max_iter), if desired. Once this is completed, a wait is implemented. State 706 indicates the measurements are done and a value representing Vout is obtained as meas_code[7:0], an eight-bit value, for example. A number of measurements are provided to an adder 715 which provides a sum of the measurements as sum_meas_code[11:0], a twelve bit value, for example.

A shift circuit 710 outputs an average value for Vout, av_meas_code[7:0], to a decision block 720 when the FSM reaches the measurement done state 706. The decision block also receives WP. The decision block provides an output to a block 721 indicating whether WP>av_meas_code[7:0]. Based on the decision block, the block 721 increments or decrements an offset_count by 1 or -1, respectively, or leaves it unchanged at 0. A block 722 clips the offset_count to a maximum offset_shift code, to ensure that offset_count is not too large. The output of the block 722, -Δε(T)/γ, is provided to the summing circuit 545. The summing circuit 545 also receives -ε/γ from the initial slope/offset calibration circuit 723. The output of the summing circuit, -ε/γ -Δε(T)/γ, is provided to a block 724 which clips the value to a maximum offset code, to provide an adjusted offset code. This code is provided to the summing circuit 323 of FIG. 6, for example.

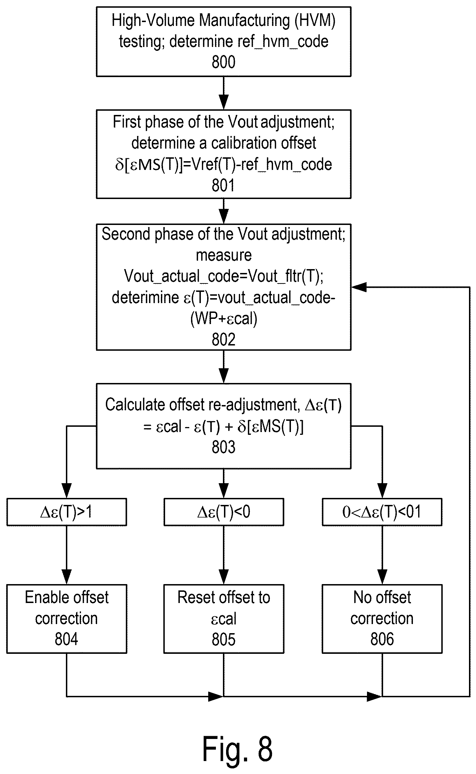

FIG. 8 depicts a flowchart of an example process consistent with FIGs. 4-7, in accordance with various embodiments. Block 800 includes high-volume manufacturing testing (HVM) in which ref_hvm_code is determined, e.g., a code that refers to the analog value of the voltage etalon, Vref = k*Vbgr, where 0<k<1. This code is characterized and recorded, using the described measurement system. During a Vmin search, the control loop of the measurement circuit is enabled. The loop ensures that post-LPF pattern-dependent distortions of the output voltage are factored in the resulting voltage-to-frequency (V/F) curve. Additionally, the loop ensures that the difference between the actual VR output voltage and the desired WP equivalent is bound by the measurement system resolution.

Block 801 involves a first phase of Vout adjustment. It includes determining a calibration offset δ[εMS(T)]=Vref(T)-ref_hvm_code. In the first phase, the measurement system is recalibrated. The current value of the digital code that refers to Vref(T) is recorded and compared to ref_hvm_code. The difference is defined as the measurement system (MS) calibration offset, δ[εMS(T)].

Block 802 involves a second phase of the Vout adjustment. This involves measuring Vout_actual_code=Vout_lpf(T) and determining ε(T)=Vout_actual_code-(WP+εcal). At the second phase, the current value of Vout_lpf(T) is measured using the measurement system, described in block 801. Its digital representation is denoted as Vout_actual_code. The effective temperature dependent DAC offset ε(T) is the difference between Vout_actual_code and WP+εcal.

Block 803 includes calculating an offset re-adjustment, Δε(T)=εcal - ε(T) + δ[εMS(T)] based on block 802 and the results of the HVM calibration. If Δε(T) > 1, block 804 is reached, where the offset correction can be enabled in single code steps corresponding to voltage steps. Alternatively, the offset correction/compensation can be proportional to Δε(T). If Δε(T) < 0, block 805 is reached, where the offset is reset to its calibration value, εcal. If 0 < Δε(T) < 1, block 806 is reached, where no offset correction is provided.

Note that when the measurement circuit loop is disabled, no offset correction occurs.

The above described process can be performed periodically when the VR is in a regulation state. The time between the two consecutive measurements can be configurable by fuses.

In summary, the solutions provide a way to mitigate/cancel out slow variations (mainly temperature and aging) of a VR output voltage by adding a measurement circuit having a dedicated slow feedback loop. The solutions provide an opportunity for guard band reduction and allow for a reduction in a VR controller area and/or quiescent power. Moreover, due to more than, e.g., two decades difference between the bandwidths of the main and the slow feedback loops, the solutions do not introduce any instability risks. An introduction of the slow feedback loop is transparent for HVM Vmin flows and system validation flows.

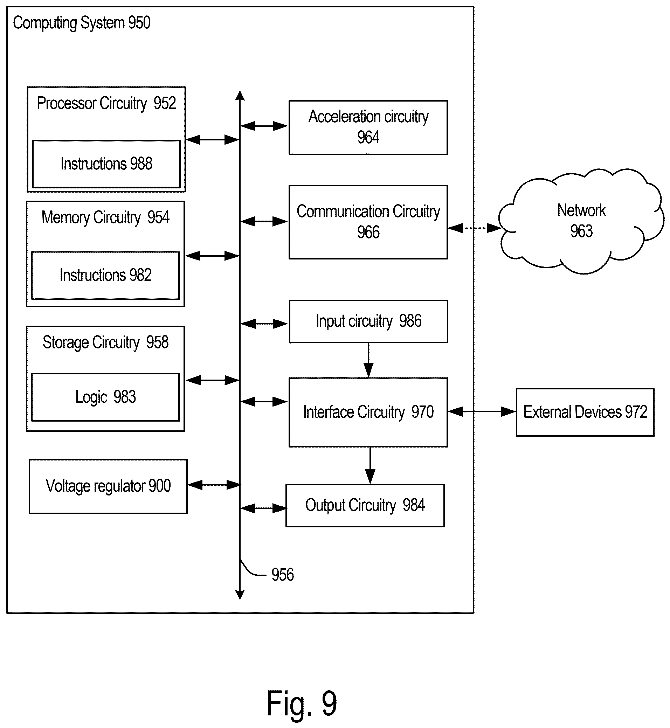

FIG. 9 illustrates an example of components that may be present in a computing system 950 for implementing the techniques (e.g., operations, processes, methods, and methodologies) described herein.

The computing system 950 may include any combinations of the hardware or logical components referenced herein. The components may be implemented as ICs, portions thereof, discrete electronic devices, or other modules, instruction sets, programmable logic or algorithms, hardware, hardware accelerators, software, firmware, or a combination thereof adapted in the computing system 950, or as components otherwise incorporated within a chassis of a larger system. In an example implementation, the voltage regulator and associated measurement circuits described above are represented by the voltage regulator 900.

In one approach, all or part of the computing system 950 is provided in a SoP, System in Package (SiP) or a System on Chip (SoC).

The voltage regulator can provide a voltage Vout to one or more of the components of the computing system 950. Also, the computing system 950 may contain one or more voltage regulators. The memory circuitry 954 may store instructions and the processor circuitry 952 may execute the instructions to perform the functions described herein.

The system 950 includes processor circuitry in the form of one or more processors 952. The processor circuitry 952 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 952 may include one or more hardware accelerators (e.g., same or similar to acceleration circuitry 964), which may be microprocessors, programmable processing devices (e.g., FPGA, ASIC, etc.), or the like. The one or more accelerators may include, for example, computer vision and/or deep learning accelerators. In some implementations, the processor circuitry 952 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein

The processor circuitry 952 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low-voltage processor, an embedded processor, or any other known processing elements, or any suitable combination thereof. The processors (or cores) 952 may be coupled with or may include memory/storage and may be configured to execute instructions stored in the memory/storage to enable various applications or operating systems to run on the platform 950. The processors (or cores) 952 is configured to operate application software to provide a specific service to a user of the platform 950. In some embodiments, the processor(s) 952 may be a special-purpose processor(s)/controller(s) configured (or configurable) to operate according to the various embodiments herein.

As examples, the processor(s) 952 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor(s) 952 may be a part of a system on a chip (SoC), System-in-Package (SiP), a multi-chip package (MCP), and/or the like, in which the processor(s) 952 and other components are formed into a single integrated circuit, or a single package, such as the Edison^{™} or Galileo^{™} SoC boards from Intel^{®} Corporation. Other examples of the processor(s) 952 are mentioned elsewhere in the present disclosure.

The system 950 may include or be coupled to acceleration circuitry 964, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 964 may comprise logic blocks or logic fabric and other interconnected resources that may be programmed (configured) to perform various functions, such as the procedures, methods, functions, etc. of the various embodiments discussed herein. In such implementations, the acceleration circuitry 964 may also include memory cells (e.g., EPROM, EEPROM, flash memory, static memory (e.g., SRAM, antifuses, etc.) used to store logic blocks, logic fabric, data, etc. in LUTs and the like.

In some implementations, the processor circuitry 952 and/or acceleration circuitry 964 may include hardware elements specifically tailored for machine learning and/or artificial intelligence (AI) functionality. In these implementations, the processor circuitry 952 and/or acceleration circuitry 964 may be, or may include, an AI engine chip that can run many different kinds of AI instruction sets once loaded with the appropriate weightings and training code. Additionally or alternatively, the processor circuitry 952 and/or acceleration circuitry 964 may be, or may include, AI accelerator(s), which may be one or more of the aforementioned hardware accelerators designed for hardware acceleration of AI applications. As examples, these processor(s) or accelerators may be a cluster of artificial intelligence (AI) GPUs, tensor processing units (TPUs) developed by Google^{®} Inc., Real AI Processors (RAPs^{™}) provided by AlphaICs^{®}, Nervana^{™} Neural Network Processors (NNPs) provided by Intel^{®} Corp., Intel^{®} Movidius^{™} Myriad^{™} X Vision Processing Unit (VPU), NVIDIA^{®} PX^{™} based GPUs, the NM500 chip provided by General Vision^{®}, Hardware 3 provided by Tesla^{®}, Inc., an Epiphany^{™} based processor provided by Adapteva^{®}, or the like. In some embodiments, the processor circuitry 952 and/or acceleration circuitry 964 and/or hardware accelerator circuitry may be implemented as AI accelerating co-processor(s), such as the Hexagon 685 DSP provided by Qualcomm^{®}, the PowerVR 2NX Neural Net Accelerator (NNA) provided by Imagination Technologies Limited^{®}, the Neural Engine core within the Apple^{®} A11 or A12 Bionic SoC, the Neural Processing Unit (NPU) within the HiSilicon Kirin provided by Huawei^{®}, and/or the like. In some hardware-based implementations, individual subsystems of system 950 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The system 950 also includes system memory circuitry 954. Any number of memory devices may be used to provide for a given amount of system memory. As examples, the memory circuitry 954 may be, or include, volatile memory such as random access memory (RAM), static RAM (SRAM), dynamic RAM (DRAM), synchronous DRAM (SDRAM), RAMBUS^{®} Dynamic Random Access Memory (RDRAM^{®}), and/or any other desired type of volatile memory device. Additionally or alternatively, the memory circuitry 954 may be, or include, non-volatile memory such as read-only memory (ROM), erasable programmable ROM (EPROM), electrically erasable programmable (EEPROM), flash memory, non-volatile RAM, ferroelectric RAM, phase-change memory (PCM), flash memory, and/or any other desired type of non-volatile memory device. Access to the memory circuitry 954 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 958 provides persistent storage of information such as data, applications, operating systems and so forth. In an example, the storage circuitry 958 may be implemented via a solid-state disk drive (SSDD) and/or high-speed electrically erasable memory (commonly referred to as "flash memory"). Other devices that may be used for the storage circuitry 958 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 954 and/or storage circuitry 958 may also incorporate three-dimensional (3D) cross-point (XPOINT) memories from Intel^{®} and Micron^{®}.

The memory circuitry 954 and/or storage circuitry 958 is/are configured to store computational logic 983 in the form of software, firmware, microcode, or hardware-level instructions to implement the techniques described herein. The computational logic 983 may be employed to store working copies and/or permanent copies of programming instructions, or data to create the programming instructions, for the operation of various components of system 950 (e.g., drivers, libraries, application programming interfaces (APIs), etc.), an operating system of system 950, one or more applications, and/or for carrying out the embodiments discussed herein. The computational logic 983 may be stored or loaded into memory circuitry 954 as instructions 982, or data to create the instructions 982, which are then accessed for execution by the processor circuitry 952 to carry out the functions described herein. The processor circuitry 952 and/or the acceleration circuitry 964 accesses the memory circuitry 954 and/or the storage circuitry 958 over the interconnect (IX) 956. The instructions 982 direct the processor circuitry 952 to perform a specific sequence or flow of actions, for example, as described with respect to flowchart(s) and block diagram(s) of operations and functionality depicted previously. The various elements may be implemented by assembler instructions supported by processor circuitry 952 or high-level languages that may be compiled into instructions 988, or data to create the instructions 988, to be executed by the processor circuitry 952. The permanent copy of the programming instructions may be placed into persistent storage devices of storage circuitry 958 in the factory or in the field through, for example, a distribution medium (not shown), through a communication interface (e.g., from a distribution server (not shown)), over-the-air (OTA), or any combination thereof.

The IX 956 couples the processor 952 to communication circuitry 966 for communications with other devices, such as a remote server (not shown) and the like. The communication circuitry 966 is a hardware element, or collection of hardware elements, used to communicate over one or more networks 963 and/or with other devices. In one example, communication circuitry 966 is, or includes, transceiver circuitry configured to enable wireless communications using any number of frequencies and protocols such as, for example, the Institute of Electrical and Electronics Engineers (IEEE) 802.11 (and/or variants thereof), IEEE 802.23.4, Bluetooth^{®} and/or Bluetooth^{®} low energy (BLE), ZigBee^{®}, LoRaWAN^{™} (Long Range Wide Area Network), a cellular protocol such as 3GPP LTE and/or Fifth Generation (5G)/New Radio (NR), and/or the like. Additionally or alternatively, communication circuitry 966 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others.

The IX 956 also couples the processor 952 to interface circuitry 970 that is used to connect system 950 with one or more external devices 972. The external devices 972 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical neural network (ONN) integrated circuit (IC) and/or the like), and/or other like devices.

In some optional examples, various input/output (I/O) devices may be present within or connected to, the system 950, which are referred to as input circuitry 986 and output circuitry 984. The input circuitry 986 and output circuitry 984 include one or more user interfaces designed to enable user interaction with the platform 950 and/or peripheral component interfaces designed to enable peripheral component interaction with the platform 950. Input circuitry 986 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 984 may be included to show information or otherwise convey information, such as sensor readings, actuator position(s), or other like information. Data and/or graphics may be displayed on one or more user interface components of the output circuitry 984. Output circuitry 984 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Crystal Displays (LCD), LED displays, quantum dot displays, projectors, etc.), with the output of characters, graphics, multimedia objects, and the like being generated or produced from the operation of the platform 950. The output circuitry 984 may also include speakers and/or other audio emitting devices, printer(s), and/or the like. Additionally or alternatively, sensor(s) may be used as the output circuitry 984 (e.g., an image capture device, motion capture device, or the like) and one or more actuators may be used as the output device circuitry 984 (e.g., an actuator to provide haptic feedback or the like). Peripheral component interfaces may include, but are not limited to, a non-volatile memory port, a USB port, an audio jack, a power supply interface, etc. In some embodiments, a display or console hardware, in the context of the present system, may be used to provide output and receive input of an edge computing system; to manage components or services of an edge computing system; identify a state of an edge computing component or service; or to conduct any other number of management or administration functions or service use cases.

The components of the system 950 may communicate over the IX 956. The IX 956 may include any number of technologies, including ISA, extended ISA, I2C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, PROFIBUS, and/or any number of other IX technologies. The IX 956 may be a proprietary bus, for example, used in a SoC based system.

The number, capability, and/or capacity of the elements of system 950 may vary, depending on whether computing system 950 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 950 may comprise one or more components of a data center, a desktop computer, a workstation, a laptop, a smartphone, a tablet, a digital camera, a smart appliance, a smart home hub, a network appliance, and/or any other device/system that processes data.

The techniques described herein can be performed partially or wholly by software or other instructions provided in a machine-readable storage medium (e.g., memory). The software is stored as processor-executable instructions (e.g., instructions to implement any other processes discussed herein). Instructions associated with the flowchart (and/or various embodiments) and executed to implement embodiments of the disclosed subject matter may be implemented as part of an operating system or a specific application, component, program, object, module, routine, or other sequence of instructions or organization of sequences of instructions.

The storage medium can be a tangible, non-transitory machine readable medium such as read only memory (ROM), random access memory (RAM), flash memory devices, floppy and other removable disks, magnetic storage media, optical storage media (e.g., Compact Disk Read-Only Memory (CD ROMS), Digital Versatile Disks (DVDs)), among others.

The storage medium may be included, e.g., in a communication device, a computing device, a network device, a personal digital assistant, a manufacturing tool, a mobile communication device, a cellular phone, a notebook computer, a tablet, a game console, a set top box, an embedded system, a TV (television), or a personal desktop computer.

Some non-limiting examples of various embodiments are presented below.

Example 1 includes an apparatus, comprising: a voltage regulator (VR) having an input node and an output node; a voltage-shaping circuit coupled to the input node, wherein the voltage-shaping circuit comprises a summing circuit; and a measurement circuit coupled to the output node and the summing circuit.

Example 2 includes the apparatus of Example 1, wherein the voltage-shaping circuit comprises an input node configured to receive a work point voltage of the VR.

Example 3 includes the apparatus of Example 2, wherein the input node of the voltage-shaping circuit is coupled to the summing circuit via a multiplier.

Example 4 includes the apparatus of any one of Examples 1-3, wherein the VR operates according to a first clock and the measurement circuit operates according to a second clock, and a frequency of the first clock is at least 10-100 times higher than a frequency of the second clock.

Example 5 includes the apparatus of any one of Examples 1-4, wherein the measurement circuit comprises a comparator having input nodes coupled to the output node of the VR and to an input node of the voltage-shaping circuit.

Example 6 includes the apparatus of any one of Examples 1-5, wherein the measurement circuit comprises a comparator having an input node coupled to the output node of the VR, a finite state machine (FSM) coupled to an output node of the comparator, and a summing circuit having an input node coupled to the FSM and an output node coupled to the summing circuit of the voltage-shaping circuit.

Example 7 includes the apparatus of any one of Examples 1-6, wherein the measurement circuit comprises a comparator having input nodes coupled to the output node of the VR and to an output node of a digital-to-analog converter (DAC), and the DAC comprises a resistor ladder coupled to the output node of the DAC via a demultiplexer.

Example 8 includes the apparatus of Example 7, wherein the resistor ladder comprises a supply voltage node coupled to a bandgap reference circuit.

Example 9 includes the apparatus of Example 7 or 8, further comprising an up/down counter coupled to the demultiplexer and a finite state machine (FSM) coupled to the up/down counter, wherein the demultiplexer is configured to pass a sequence of increasing voltages and a sequence of decreasing voltages to the output node of the DAC. Example 10 includes the apparatus of any one of Examples 1-9, wherein the apparatus is provided in at least one of an integrated circuit, a System on Chip, a System in Package or a computing device.

Example 11 includes an apparatus, comprising: a voltage regulator (VR) having an input node to receive a work point voltage, and an output node, wherein the VR is configured to implement a first feedback loop to govern a voltage at the output node in response to the work point voltage; a voltage-shaping circuit coupled to the input node; and a measurement circuit coupled to the output node and to the voltage-shaping circuit, wherein the measurement circuit is configured to implement a second feedback loop to govern the work point voltage.

Example 12 includes the apparatus of Example 11, wherein the first feedback loop is configured to operate at a first frequency and the second feedback loop operates at a second frequency which is less than the first frequency.

Example 13 includes the apparatus of Example 11 or 12, wherein the voltage-shaping circuit is configured to receive an initial value of the work point voltage and to output a modified value of the work point voltage to the input node of the VR.

Example 14 includes the apparatus of Example 13, wherein the voltage-shaping circuit comprises a summing circuit configured to provide the modified value of the work point voltage, and the summing circuit is coupled to the measurement circuit.

Example 15 includes the apparatus of Example 14, wherein the voltage-shaping circuit comprises a multiplier configured to provide the modified value of the work point voltage, and the summing circuit is coupled to the multiplier.

Example 16 includes a system, comprising: a processor; a voltage regulator (VR) coupled to the processor, wherein the VR is configured to govern an output voltage in response to a work point voltage; and one or more circuits coupled to the VR, wherein the one or more circuits are configured to govern the work point voltage.

Example 17 includes the system of Example 16, wherein the one or more circuits comprise a bandgap reference circuit configured to generate a bandgap reference voltage, and a comparator configured to compare the output voltage to voltages obtained from the bandgap reference voltage.

Example 18 includes the system of Example 17, wherein the one or more circuits comprise a finite state machine (FSM) configured to operate in a measure up state in which the voltages obtained from the bandgap reference voltage are increased in a sequence, and in a measure down state in which the voltages obtained from the bandgap reference voltage are decreased in a sequence.

Example 19 includes the system of Example 17 or 18, wherein the one or more circuits further comprise a finite state machine (FSM) coupled to an output node of the comparator, and the FSM is configured to increment or decrement the work point voltage based on a value received on the output node of the comparator.

Example 20 includes the system of any one of Examples 17-19, wherein the one or more circuits are configured to determine whether to increment, decrement or not change the work point voltage in respective clock cycles of the one or more circuits based on an output of the comparator.

Example 21 includes a method, comprising: implementing a first feedback loop at a voltage regulator (VR) having an input node to receive a work point voltage, and an output node, wherein the first feedback loop is to govern a voltage at the output node in response to the work point voltage; and implementing a second feedback loop with a measurement circuit and a voltage-shaping circuit to govern the work point voltage.

Example 22 includes the method of Example 21, further comprising: operating the first feedback loop at a first frequency and the second feedback loop at a second frequency which is less than the first frequency.

Example 23 includes the method of Example 21 or 22, further comprising, at the voltage-shaping circuit, receiving an initial value of the work point voltage and outputting a modified value of the work point voltage to the input node of the VR.

Example 24 includes the method of any one of Examples 21-23, further comprising, at a summing circuit of the voltage-shaping circuit, providing the modified value of the work point voltage.

Example 25 includes the method of any one of Examples 21-24, further comprising, at a multiple of the voltage-shaping circuit, providing the modified value of the work point voltage.

Example 26 includes an apparatus, comprising means to perform the method of any one of Examples 21-25.

Example 27 includes a machine-readable storage including machine-readable instructions which, when executed, cause a computer to implement the method of any one of Examples 21-25.

Example 28 includes a computer program comprising instructions which, when executed by a computer, cause the computer to carry out the method of any one of Examples 21-25.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

The terms "substantially," "close," "approximately," "near," and "about," generally refer to being within +/- 10% of a target value. Unless otherwise specified the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

For the purposes of the present disclosure, the phrases "A and/or B" and "A or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group), a combinational logic circuit, and/or other suitable hardware components that provide the described functionality. As used herein, "computer-implemented method" may refer to any method executed by one or more processors, a computer system having one or more processors, a mobile device such as a smartphone (which may include one or more processors), a tablet, a laptop computer, a set-top box, a gaming console, and so forth.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

While the disclosure has been described in conjunction with specific embodiments thereof, many alternatives, modifications and variations of such embodiments will be apparent to those of ordinary skill in the art in light of the foregoing description. The embodiments of the disclosure are intended to embrace all such alternatives, modifications, and variations as to fall within the broad scope of the appended claims.

In addition, well-known power/ground connections to integrated circuit (IC) chips and other components may or may not be shown within the presented figures, for simplicity of illustration and discussion, and so as not to obscure the disclosure. Further, arrangements may be shown in block diagram form in order to avoid obscuring the disclosure, and also in view of the fact that specifics with respect to implementation of such block diagram arrangements are highly dependent upon the platform within which the present disclosure is to be implemented (i.e., such specifics should be well within purview of one skilled in the art). Where specific details (e.g., circuits) are set forth in order to describe example embodiments of the disclosure, it should be apparent to one skilled in the art that the disclosure can be practiced without, or with variation of, these specific details. The description is thus to be regarded as illustrative instead of limiting.

An abstract is provided that will allow the reader to ascertain the nature and gist of the technical disclosure. The abstract is submitted with the understanding that it will not be used to limit the scope or meaning of the claims. The following claims are hereby incorporated into the detailed description, with each claim standing on its own as a separate embodiment.

## Claims

1. An apparatus, comprising:
a voltage regulator having an input node and an output node;
a voltage-shaping circuit coupled to the input node, wherein the voltage-shaping circuit comprises a summing circuit; and
a measurement circuit coupled to the output node and the summing circuit.

2. The apparatus of claim 1, wherein the voltage-shaping circuit comprises an input node configured to receive a work point voltage of the voltage regulator.

3. The apparatus of claim 2, wherein the input node of the voltage-shaping circuit is coupled to the summing circuit via a multiplier.

4. The apparatus of any one of claims 1-3, wherein the voltage regulator operates according to a first clock and the measurement circuit operates according to a second clock, and a frequency of the first clock is at least 10-100 times higher than a frequency of the second clock.

5. The apparatus of any one of claims 1-4, wherein the measurement circuit comprises a comparator having input nodes coupled to the output node of the voltage regulator and to an input node of the voltage-shaping circuit.

6. The apparatus of any one of claims 1-5, wherein the measurement circuit comprises a comparator having an input node coupled to the output node of the voltage regulator, a finite state machine (FSM) coupled to an output node of the comparator, and a summing circuit having an input node coupled to the FSM and an output node coupled to the summing circuit of the voltage-shaping circuit.

7. The apparatus of any one of claims 1-6, wherein the measurement circuit comprises a comparator having input nodes coupled to the output node of the voltage regulator and to an output node of a digital-to-analog converter (DAC), and the DAC comprises a resistor ladder coupled to the output node of the DAC via a demultiplexer.

8. The apparatus of claim 7, wherein the resistor ladder comprises a supply voltage node coupled to a bandgap reference circuit.

9. The apparatus of claim 7 or 8, further comprising an up/down counter coupled to the demultiplexer and a finite state machine coupled to the up/down counter, wherein the demultiplexer is configured to pass a sequence of increasing voltages and a sequence of decreasing voltages to the output node of the DAC.

10. The apparatus of any one of claims 1-9, wherein the apparatus is provided in at least one of an integrated circuit, a System on Chip, a System in Package or a computing device.

11. The apparatus of any one of claims 1-10, wherein the voltage regulator is configured to implement a first feedback loop to govern a voltage at the output node in response to a work point voltage, and a measurement circuit coupled to the output node is configured to implement a second feedback loop to govern the work point voltage.

12. A method, comprising: implementing a first feedback loop at a voltage regulator (VR) having an input node to receive a work point voltage, and an output node, wherein the first feedback loop is to govern a voltage at the output node in response to the work point voltage; and implementing a second feedback loop with a measurement circuit and a voltage-shaping circuit to govern the work point voltage.

13. The method of claim 12, further comprising: operating the first feedback loop at a first frequency and the second feedback loop at a second frequency which is less than the first frequency.

14. An apparatus, comprising means to perform the method of claim 12 or 13.

15. A machine-readable storage including machine-readable instructions which, when executed, cause a computer to implement the method of claim 12 or 13.
